# EUROPÄISCHE PATENTSCHRIFT

(11) **EP 1 731 819 B1**
(45) Veröffentlichungstag und Bekanntmachung des Hinweises auf die Patenterteilung: **14.04.2010**
(21) Anmeldenummer: 06115048.8
(22) Anmeldetag: 07.06.2006
(51) Int. Cl.: F16L 25/00, F16L 37/098

(54) **Rohrverbindung**
Pipe coupling
Raccord de tuyau

(30) Priorität: 07.06.2005 DE 202005008984 U
(43) Veröffentlichungstag der Anmeldung: 13.12.2006
(73) Patentinhaber: MANN+HUMMEL GmbH, 71638 Ludwigsburg (DE)
(72) Erfinder: Bauer, Sascha, 71549, Auenwald (DE); Fasold, Michael, 71549, Auenwald (DE)

(56) Entgegenhaltungen:
- EP-A- 1 496 301
- EP-A2- 1 072 835
- DE-U1- 20 113 861
- FR-A- 2 436 929
- FR-A1- 2 750 755
- US-B1- 6 428 052

## Beschreibung

### Technisches Gebiet

Die Erfindung betrifft eine Verbindung zwischen zwei Rohren, wobei ein Rohrende zumindest im zu verbindenden Endbereich aus einem flexiblen und/oder elastischem Material besteht und die Rohrenden weitgehend dichtend aneinander gefügt werden sollen nach dem Oberbegriff des Hauptanspruchs.

### Stand der Technik

Solche gattungsgemäßen Rohrverbindungen werden beispielsweise bei Luftführungssystemen verschiedenster Art angewendet, wobei insbesondere für Luftansaugsysteme in der Kraftfahrzeugtechnik flexible leicht austauschbare Rohre oder Rohrstücke benötigt werden. Außerdem muss hier auch die Dichtheit an der Verbindungsstelle gewährleistet sein, da eine genau steuerbare Luftzumessung im Luftansaugsystem erfolgt und auch auf die akustischen Bedingungen Rücksicht genommen werden muss. Es ist somit eine luftdichte, druckverlustlose und möglichst werkzeuglos verbindbare sowie lösbare Verbindung der Rohre erforderlich, welche auch höheren axialen Kräften und Vibrationen, wie sie zum Beispiel im Kraftfahrzeug vorkommen können, stand halten kann.

Aus der FR 2 436 929 A1 ist eine Rohrverbindung bekannt, bei der ein flexibles Rohrende vorhanden ist, in das ein festes Gegenstück als anderes Rohrende einstülpbar ist. Hierbei wird beim Einstülpen das flexible Rohrende etwas aufgeweitet, so dass zumindest ein ausreichender radialer Druck des flexiblen Rohrendes auf das andere Rohrende ausgeübt wird, um die Verbindungsstelle zu fixieren.

Aus der EP 1 496 301 A1 ist bekannt, dass lediglich der letzte Bereich eines Rohres umgestülpt wird und durch diese Umstülpung ein Verrasten an Nutkanten und Rastnasen erfolgt, um ein Herausziehen des Rohres zu verhindern. Dieser Stand der Technik zeigt ferner ein flexibles, ziehharmonikaförmlg gefaltetes Kunststoffteil, welches durch die Faltung mehrere Kanten aufweist, diese sind jedoch als zusätzliches Bauteil an einem Rohr angeordnet, die sich zwischen den beiden unterschiedlichen Durchmesser der Rohrenden verspannen.

Eine Verbindung eines gewellten Metallrohres mit einem Anschlussstück ist aus der DE 201 13 861 U1 bekannt, bei der ein Dichtring auf das Ende des gewellten Metallrohres aufgebracht ist, der beim Aneinanderfügen durch eine Komprimierung eine radiale Dichtwirkung zwischen dem Metallrohr und dem Anschlussstück ausübt. Eine solche radiale Dichtwirkung wird gemäß der FR 2 750 755 A1 durch ein umgestülptes Rohrende bewirkt, das beim Aneinanderfügen der Rohre auf dem anderen Rohrende aufliegt.

Die US 6 428 052 B1 zeigt mit Bezug auf die dortige Figur 14 eine Dichtung zwischen zwei Rohrenden, bei der eine Endfalte des einen Rohrendes mittels eines dritten Bauteils im wesentlichen axial auf einen konusartigen Dichtsitz am anderen Rohrende aufgedrückt wird. Zwischen dem flexiblen Rohrende und dem anderen Rohrende ist hier ein Abstand zum Umfang des anderen Rohrendes hergestellt, sodass eine ausreichende radiale Dichtwirkung hier nicht ohne weitere Hilfsmittel bewirkbar ist.

Auch bei der EP 1 072 835 B1 ist beispielsweise der dortigen Figur 10 zu entnehmen, dass eine Endfalte des einen Rohrendes nur mittels eines dritten Bauteils auf einen axialen konusartigen Dichtsitz des anderen Rohrendes gedrückt wird. Auch hier ist hier ein Abstand zum Umfang des anderen Rohrendes hergestellt, sodass eine ausreichende radiale Dichtwirkung hier nicht ohne weitere Hilfsmittel bewirkbar ist.

### Offenbarung der Erfindung

Der Erfindung liegt die Aufgabe zugrunde, eine Rohrverbindung der eingangs genannten Art auf einfache Weise so fortzubilden, dass eine einfache Herstellung und eine sichere Verbindung auch beim Auftreten von axialen und radialen Kräften auf die Verbindungsstelle gewährleistet ist.

Eine Rohrverbindung der eingangs erwähnten Art mit einem ersten Rohrende, das mit dem Rohrende eines Gegenstücks verbindbar ist, wobei ein Rohrende derart flexibel ist, dass es das andere Rohrende mit einem Dichtsitz überlappt und bei dem ein faltenähnlich aufweitbarer Bereich am flexiblen Rohrende vorhanden ist, der über das andere Rohrende bis zu einem radial umlaufenden Dichtsitz schiebbar ist, wird erfindungsgemäß mit den Merkmalen des Hauptanspruchs weitergebildet.

In vorteilhafter Weise wird dazu am flexiblen Rohrende mindestens eine radial umlaufende Falte angebracht, die durch ein axiales Aufschieben auf das andere Rohrende bis an den Dichtsitz ein Komprimierung erfährt, die zu einer radialen Kraftkomponente des Faltenbereichs auf das andere Rohrende führt. Mit der Erfindung ist somit erreicht, dass durch die elastische Faltengestaltung auf einfache Weise eine hervorragende Dichtung des flexiblen Rohrendes zum anderen Rohrende hergestellt wird, die sowohl in axialer als auch in radialer Richtung eine Dichtung ermöglicht.

Somit können insbesondere für Luftansaugsysteme in Kraftfahrzeugen Rohrverbindungen aus einzeln hergestellten Rohrteilen gebildet werden, die leicht an die Gegebenheiten des Kraftfahrzeuges anpassbar und trotzdem sehr gut abgedichtet sind um die in der Beschreibungseinleitung beschriebenen Nachteile für die Ansaugluftregelung und hinsichtlich der akustischen Verhältnisse zu verhindern.

Vorteilhaft sind hier insbesondere Rohrverbindungen mit mindestens einer Rastvorrichtung, die mit dem faltenähnlich aufweitbaren Bereich am flexiblen Rohrende korrespondiert. Auf einfache Weise können hierzu am festen Rohrende eine Rastnase, ein Rasthaken und/oder eine Rastnut derart angebracht werden, dass nach der Komprimierung der mindestens einen Falte ein Eingriff der Falte in oder an der Rastvorrichtung zur axialen Fixierung und auch zur Abdichtung der Rohrenden erfolgt.

Bei einer nicht zur Erfindung gehörenden Rohrverbindung weist das feste Rohrende eine Rastvorrichtung mit Rasthaken auf, die den faltenähnlichen Bereich am flexiblen Rohrende außen überlappen und hieran jeweils ein Hinterschnitt vorhanden ist, gegen den nach der Komprimierung ein aufgefalteter Bereich axial gegen die Einschubrichtung drückt. Innerhalb des Bereichs zwischen dem Hinterschnitt und dem Dichtsitz kann somit nach dem Aufschieben des flexiblen Rohrendes ein axialer Druck zwischen dem Hinterschnitt und dem Dichtsitz und ein radialer Druck durch die komprimierte Falte erreicht werden.

Gemäß einer vorteilhaften Ausführungsform weist das feste Rohrende eine Rastvorrichtung auf, die aus einer umlaufenden Nut am festen Rohrende besteht, in die nach der Komprimierung ein umlaufend innen liegender Bereich mindestens einer Falte des flexiblen Rohrendes eingreift. Auch hier ist somit durch das unter radialem Druck erfolgende Einrasten in der umlaufenden Nut als Rastvorrichtung eine radiale Abdichtung und durch das Andrücken an den ebenfalls radial umlaufenden Dichtsitz beim Aufschieben und Komprimieren der Falten eine axiale Dichtung gewährleistet. Besonders vorteilhaft ist es hier, wenn zur Erhöhung des radialen Anpressdrucks der umlaufend innen liegende Bereich mindestens einer Falte zum Einrasten einen kleineren Innendurchmesser aufweist als die anderen Falten.

Die erfindungsgemäß ausgestalteten Falten können hinsichtlich des Winkels der Faltungsseiten so vorgefertigt sein, dass entweder eine oder auch alle Falten nach der Komprimierung eine Neigungsänderung in Aufschubrichtung erfahren, also praktisch in Aufschubrichtung nach außen umkippen.

Dies ist insbesondere an der Rastvorrichtung vorteilhaft, da hier dann ein Gegendruck gegen ein Auseinanderziehen bewirkt wird und es kann darüber hinaus am Dichtsitz eine bessere Anlage erfolgen. Besonders vorteilhaft ist es hierbei, wenn die Neigungsänderung entsprechend der Neigung eines konusartigen Dichtsitzes am Ende der Falten in Aufschubrichtung erfolgt.

Mit der Erfindung kann auf einfache Weise eine Produktionskostenreduzierung dadurch erreicht werden, dass eine Funktionsintegration der bisher über Elastomer- oder TPE-Dichtungen in die erfindungsgemäß hergestellten relativ dünnwandigen Faltenbereiche erfolgen kann.

Die zu verbindenden Rohrteile können alle aus einem Material z.B. PP, beispielsweise als Blasteil kostengünstig hergestellt werden. Durch die Verwendung von nur einem Material ergeben sich Zykluszeitenverkürzungen, beispielsweise in einem Corrugatorprozess, durch Vermeidung von Zwei-Komponenten-Werkzeugen und dem erfindungsgemäß verminderten Montageaufwand.

### Kurze Beschreibung der Zeichnungen

Ausführungsbeispiele der erfindungsgemäßen Rohrverbindung innerhalb des Ansaugtrakts eines Verbrennungsmotors werden anhand der Zeichnungen erläutert. Es zeigen:

Figur 1 Einen Schnitt durch eine Rohrverbindung über eine komprimierte Falte an einem flexiblen Rohrende, das auf ein festes Rohrende geschoben wird.

Figur 2 Eine Detaildarstellung mit einem flexiblen Rohrende vor dem Aufschieben auf ein weiteres Rohr.

Figur 3 Die Variante einer Verbindung mit zwei Rohrenden, die übereinander geschoben werden.

Figur 4 Die in Figur 3 gezeigten Rohrenden in der übereinander geschobenen Endstellung.

### Ausführungsform(en) der Erfindung

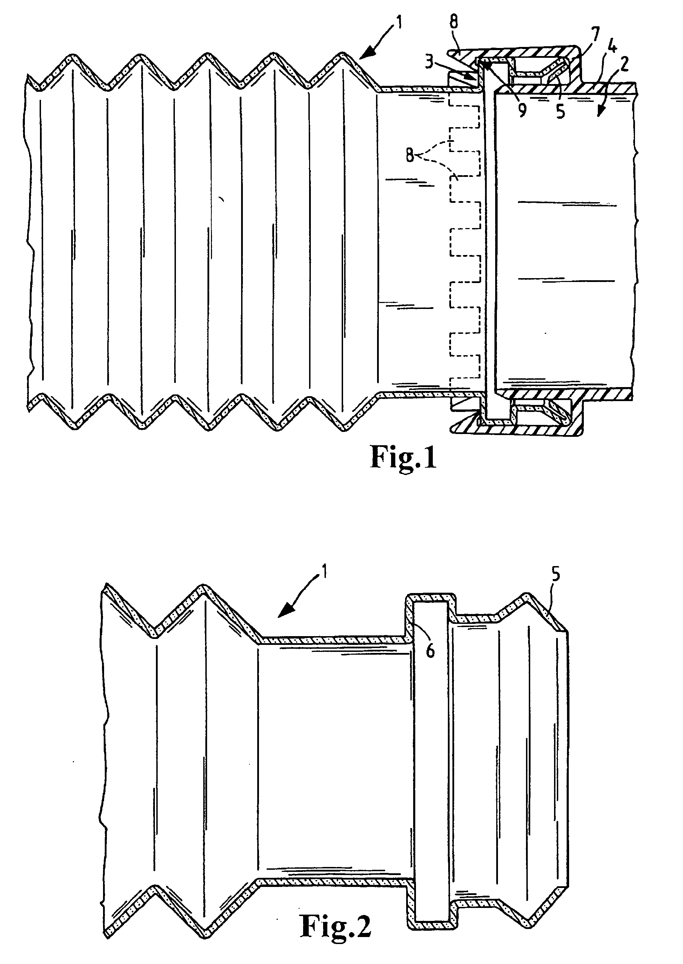

In Figur 1 und 2 ist eine nicht zur Erfindung gehörende Rohrverbindung gezeigt, die beispielsweise bei der Verbindung von Kunststoffrohren 1 und 2, z.B. aus PP, bei Luftansaugsystemen in der Kraftfahrzeugtechnik angewendet wird. Hierbei ist ein erstes flexibles Rohrende 3 am Rohr 1 vorhanden, das mit einem festen Rohrende 4 des Gegenstücks Rohr 2 verbunden werden soll.

Das Rohrende 3 weist eine Falte 5 und einen weiteren faltenähnlichen Bereich 6 auf, der in Figur 2 im nicht aufgeschobenen Zustand im Detail gezeigt ist.

Das Rohrende 3 ist gemäß der Figur 1 über das andere Rohrende 4 bis zu einem radial umlaufenden Dichtsitz 7 geschoben, so dass die Falte 5 durch den axialen Druck komprimiert zusammenklappt und sich gegen den Dichtsitz 7 neigt und damit zu einer axialen Abdichtung der Rohre 1 und 2 führt.

Am Rohrende 4 des Rohres 2 nach der Figur 1 ist zur Fixierung der dichtenden Falte 5 eine Rastvorrichtung in Form von Rasthaken 8 vorhanden, die den Bereich 6 und die Falte 5 am flexiblen Rohrende 3 außen überlappen. An den Rasthaken 8 ist jeweils ein Hinterschnitt 9 vorhanden, gegen den nach der Komprimierung der Bereich 6 des Rohrendes 3 axial gegen die Einschubrichtung drückt.

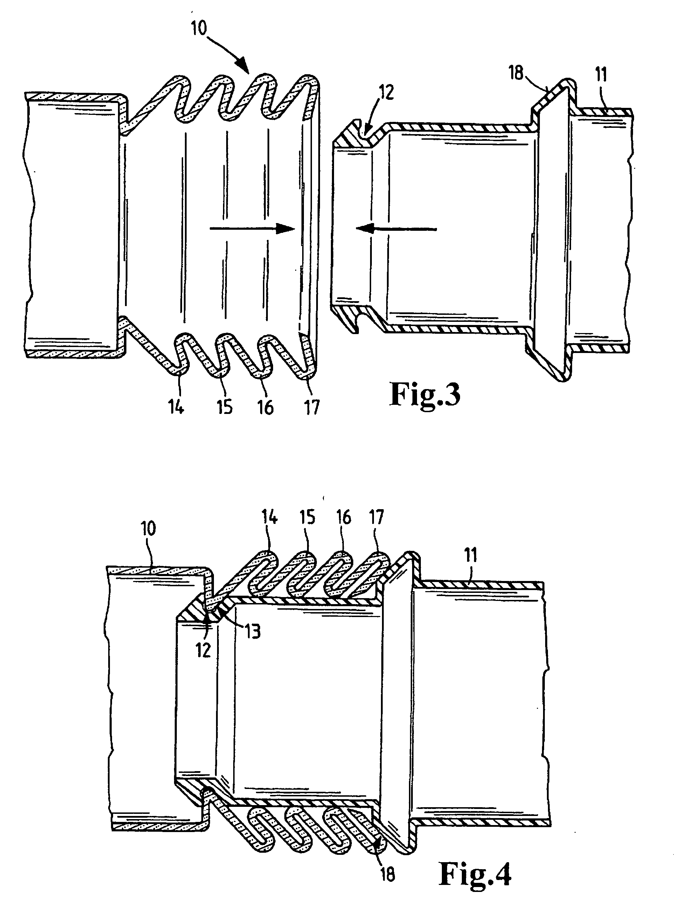

Aus Figur 3 ist ein erfindungsgemäßes Ausführungsbeispiel mit Rohrenden 10 und 11 zu entnehmen, bei dem das feste Rohrende 11 eine Rastvorrichtung aufweist, die aus einer umlaufenden Nut 12 besteht. Das Rohrende 10 weist Falten 14, 15, 16 und 17 auf, wobei die Falte 17 als erste Kontaktfalte ausgebildet ist. Das Rohrende 10 wird auf das Rohrende 11 zubewegt und über dieses Rohrende geschoben.

Figur 4 zeigt die Endposition des Rohrendes 10 auf dem Rohrende 11. Nach dem Aufschieben des Rohrendes 10 liegt ein umlaufend innenliegender Bereich 13 einer Falte 14 des Rohrendes 10 unter radialem Druck an dem Rohrende 11 an. Das Einrasten des Rohrendes 10 erfolgt derart, dass durch das Andrücken an einen radial umlaufenden Dichtsitz 18 am festen Rohrende 11 beim Aufschieben und Komprimieren der Falten 14, 15, 16 und 17 eine axiale Dichtung gewährleistet ist.

Die Falten 14, 15, 16 und 17 des Rohrendes 10 nach der Figur 3 sind hinsichtlich des Winkels der Faltungsseiten so vorgefertigt, dass sie zumindest nach der Komprimierung eine Neigungsänderung in Aufschubrichtung erfahren. Diese Neigungsänderung entspricht dann insbesondere der Neigung eines konusartig ausgeführten Dichtsitzes 18 am Rohrende 11.

## Patentansprüche

1. Rohrverbindung mit einem ersten Rohrende (10), das mit dem Rohrende (11) eines Gegenstücks verbindbar ist, wobei ein Rohrende (10) derart flexibel ist, dass es das andere Rohrende (11) mit einem Dichtsitz überlappt und mit einem faltenähnlich aufweitbaren Bereich am flexiblen Rohrende (10) über das andere Rohrende (11) bis zu einem radial umlaufenden, konusartigen Dichtsitz (18) schiebbar ist, wobei das flexible Rohrende (10) eine Mehrzahl von Falten (14,15,16,17) aufweist, die durch ein axiales Aufschieben auf das andere Rohrende (11) bis an den Dichtsitz (18) eine Komprimierung erfahren, die zu einer radialen Kraftkomponente des Faltenbereichs (14,15,16,17) auf das andere Rohrende (11) führt, wobei die Mehrzahl von Falten (14,15, 16, 17) nach der Komprimierung eine Neigungsänderung in Aufschubrichtung erfährt und wobei die Neigungsänderung entsprechend der Neigung des konusartigen Dichtsitzes (18) am Ende der Falten in Aufschubrichtung erfolgt.

2. Rohrverbindung nach Anspruch 1, die eine Rastvorrichtung aufweist, die mit dem faltenähnlich aufweitbaren Bereich am flexiblen Rohrende (10) korrespondiert, **dadurch gekennzeichnet, dass** am anderen Rohrende (11) eine Rastnase, ein Rasthaken und/oder eine Rastnut 12) derart angebracht ist, dass nach der Komprimierung der Mehrzahl von Falten (14-17) ein Eingriff einer der Falten (14) in oder an der Rastvorrichtung zur axialen Fixierung der Rohrenden (10,11) erfolgt.

3. Rohrverbindung nach Anspruch 2, **dadurch gekennzeichnet, dass** das feste Rohrende (11) eine Rastvorrichtung aufweist, die aus einer umlaufenden Nut (12) am festen Rohrende (11) besteht, in die nach der Komprimierung ein umlaufend innen liegender Bereich (13) mindestens einer Falte (14) des flexiblen Rohrendes (10) eingreift.

4. Rohrverbindung nach Anspruch 3, **dadurch gekennzeichnet, dass** der eine umlaufend innen liegende Bereich (13) mindestens einer Falte (14) einen kleineren Innendurchmesser aufweist als die anderen Falten (15,16,17).

5. Rohrverbindung nach einem der vorhergehenden Ansprüche, **dadurch gekennzeichnet, dass** eines und/oder beide der zu verbindenden Rohre (1,2) einschließlich der Rohrenden (10,11) als Blasteil hergestellt sind.

6. Rohrverbindung nach einem der vorhergehenden Ansprüche, **dadurch gekennzeichnet, dass** eines und/oder beide der zu verbindenden Rohre (1,2) einschließlich der Rohrenden (10,11) aus Polypropylen (PP) hergestellt sind.

## Claims

1. Tube connection with a first tube end (10) which is connectable with the tube end (11) of a counterpart, one tube end (10) being flexible in such a way that it overlaps the other tube end (11) with a sealing seat and and that it can be pushed with a pleat-like expandable section at the flexible tube end (10) over the other tube end (11) up to a radially surrounding conical sealing seat (18), the flexible tube end (10) featuring a plurality of pleats (14,15,16,17) which undergo a compression through the axial pushing onto the other tube end (11) up to the sealing seat (18), the compression leading to a radial force component of the pleat section (14,15,16,17) onto the other tube end (11), the plurality of pleats (14,15,16,17) undergoing a change of inclination in push direction after the compression and the change of inclination taking place according to the inclination of the conical sealing seat (18) at the end of the pleats in push direction.

2. Tube connection according to claim 1, featuring a locking device which corresponds with the pleat-like expandable section at the flexible tube end (10), **characterized in that** at the other tube end (11) a mounting boss, locking hook and/or locking groove (12) is attached in such a way that after the compression of the plurality of pleats (14-17) an engagement of one of the pleats (14) in or at the locking device is realized for an axial fixing of the tube ends (10,11).

3. Tube connection according to claim 2, **characterized in that** the fixed pipe end (11) features a locking device which consists of a circumferential groove (12) at the fixed pipe end (11) into which engages a circumferential inside located section (13) of at least one pleat (14) of the flexible tube end (10) after the compression.

4. Tube connection according to claim 3, **characterized in that** the one circumferential inside located section (13) of at least one pleat (14) features a smaller inner diameter than the other pleats (15,16,17).

5. Tube connection according to one of the above-mentioned claims, **characterized in that** one and/or both of the tubes (1,2) to be connected including the pipe ends (10,11) are manufactured as blow-molded part.

6. Tube connection according to one of the above-mentioned claims, **characterized in that** one and/or both of the tubes (1,2) to be connected including the pipe ends (10,11) are made of polypropylene.

## Revendications

1. Jonction tubulaire avec une premier extrémité de tube (10) qui peut être assemblée à l'extrémité de tube (11) d'une contrepartie, une extrémité de tube (10) étant flexible de telle manière qu'elle recouvre l'autre extrémité de tube (11) avec un siège d'étanchéité et, par une zone extensible à la manière de plis au niveau de l'extrémité de tube flexible (10), peut être enfoncée sur l'autre extrémité de tube (11) jusqu'à un siège d'étanchéité (18) conique radialement périphérique, l'extrémité de tube flexible (10) présentant une pluralité de plis (14, 15, 16, 17) qui, par un enfoncement axial sur l'autre extrémité de tube (11) jusqu'au siège d'étanchéité (18), subissent une compression qui produit une composante de force radiale de la zone plissée (14, 15, 16, 17) sur l'autre extrémité de tube (11), la pluralité des plis (14, 15, 16, 17) subissant après la compression une modification d'inclinaison dans la direction d'enfoncement et la modification d'inclinaison s'effectuant à l'extrémité des plis dans la direction d'enfoncement d'une manière correspondant à l'inclinaison du siège d'étanchéité conique (18).

2. Jonction tubulaire selon la revendication 1, qui présente un dispositif d'encliquetage qui correspond à la zone extensible à la manière de plis au niveau de l'extrémité de tube flexible (10), **caractérisée en ce qu'**à l'autre extrémité de tube (11) est placé un ergot d'encliquetage, un crochet d'encliquetage et/ou une rainure d'encliquetage (12), de telle manière qu'après la compression de la pluralité de plis (14-17), il se produise une prise de l'un des plis (14) dans ou sur le dispositif d'encliquetage pour l'immobilisation axiale des extrémités de tube (10, 11).

3. Jonction tubulaire selon la revendication 2, **caractérisée en ce que** l'extrémité de tube solide (11) présente un dispositif d'encliquetage qui est constitué d'une rainure périphérique (12) sur l'extrémité de tube fixe (11), dans laquelle s'engage après la compression une zone intérieure (13) radialement périphérique d'au moins un pli (14) de l'extrémité de tube flexible (10).

4. Jonction tubulaire selon la revendication 3, **caractérisée en ce que** la zone intérieure périphérique (13) d'au moins un pli (14) présente un diamètre intérieur plus petit que les autres plis (15, 16, 17).

5. Jonction tubulaire selon l'une des revendications précédentes, **caractérisée en ce que** l'un et/ou les deux des tubes (1, 2) à relier est/sont fabriqué(s) avec les extrémités de tube (10, 11) sous forme de pièce soufflée.

6. Jonction tubulaire selon l'une des revendications précédentes, **caractérisée en ce que** l'un et/ou les deux des tubes (1, 2) à relier est/sont fabriqué(s) avec les extrémités de tube (10, 11) en polypropylène (PP).
